# FASCICULE DE BREVET EUROPEEN

(11) **EP 1 138 124 B1**
(45) Date de publication et mention de la délivrance du brevet: **05.11.2003**
(21) Numéro de dépôt: 99958244.8
(22) Date de dépôt: 06.12.1999
(51) Int. Cl.: H04B 1/38, H04M 1/72

(54) **TELEPHONE MOBILE UNIVERSEL**
UNIVERSALES MOBILTELEFON
UNIVERSAL MOBILE TELEPHONE

(30) Priorité: 07.12.1998 FR 9815431; 10.02.1999 FR 9901574
(43) Date de publication de la demande: 04.10.2001
(73) Titulaire: SAGEM S.A., 75015 Paris (FR)
(72) Inventeur: SARRADIN, Jean-Louis, F-95807 Cergy (FR)
(74) Mandataire: Schmit, Christian Norbert Marie
(86) Numéro de dépôt international: FR9903019
(87) Numéro de publication internationale: WO00035108

(56) Documents cités:
- EP-A- 0 608 899
- EP-A- 0 665 655
- EP-A- 0 746 131
- WO-A-97/03534
- FR-A- 2 748 173
- FR-A- 2 750 282
- US-A- 5 092 788

## Description

La présente invention a pour objet un téléphone mobile utilisable de multiples façons, c'est-à-dire essentiellement pour sa fonction connue de communications téléphoniques par voies hertziennes, mais également pour d'autres fonctions représentant des besoins courants des utilisateurs. Le but de l'invention est de faciliter la construction d'un tel téléphone mobile, et essentiellement d'en réduire le coût de fabrication.

Un téléphone mobile comporte normalement un corps muni de circuits électroniques qui permettent de faire fonctionner le téléphone mobile. Il comporte également sur l'arrière un boîtier de batterie. Le boîtier de batterie est généralement amovible du corps. Un téléphone mobile comporte par ailleurs dans le corps ou le boîtier un connecteur d'alimentation pour recharger la batterie quand son énergie est épuisée. Les téléphones mobiles de la génération actuelle comportent également un connecteur d'embase dans le corps avec lequel il est possible, en plus du rechargement de la batterie, de faire communiquer le téléphone mobile avec d'autres dispositifs. Notamment, il est possible de relier le téléphone mobile à un micro-ordinateur.

La fabrication des téléphones mobiles pour être la moins coûteuse possible implique une définition rigoureuse, et immuable, des formes du corps du téléphone et du boîtier de la batterie. Elle impose également une disposition et une structure figées de connecteurs d'interface d'alimentation entre le boîtier de batterie et le corps du téléphone. La conséquence d'une telle rigueur est alors la possibilité de fabriquer en très grande série, à plusieurs millions d'exemplaires, chacune de ces parties.

Des besoins marginaux apparaissent pour les téléphones mobiles. Par exemple on peut vouloir associer un lecteur de carte à puce à un téléphone mobile. On peut vouloir également lui associer un agenda électronique. D'une autre manière, on peut prévoir de faire assurer au téléphone mobile une fonction de télécommande, hertzienne ou par infrarouge. Ou encore on veut réaliser des accès radioélectriques à des réseaux locaux. Eventuellement des fonctions de connectique, c'est-à-dire de mise à disposition de plusieurs connexions sont recherchées. A chaque fois, ces utilisations marginales présentent l'inconvénient que, si elles doivent être incorporées dans le téléphone mobile, elles induisent une refonte complète de la structure mécanique du corps du téléphone mobile. Cette refonte conduit à de nouveaux agréments des produits concernés et donc à de forts investissements. Une telle refonte n'est envisageable que si pour le fabricant il existe une assurance de pouvoir vendre en grande quantité les nouvelles formes de réalisation. Ceci n'est justement pas le cas puisque ces nouvelles formes de réalisation sont justement marginales. Leur utilisation peut se limiter à une population nettement.moins nombreuse. Par exemple quelques dizaines de milliers d'utilisateurs seulement peuvent être intéressés par une fonction donnée.

Le problème posé est donc celui de l'adaptation d'un téléphone mobile existant à des usages multiples. On connaît par la demande de brevet FR-A-2 750 282 une solution dans laquelle, pour des besoins de mesure de la consommation d'unités téléphoniques, il est prévu d'intercaler entre le corps du téléphone mobile et le boîtier de la batterie un bloc interface. Ce bloc interface s'adapte mécaniquement en position intermédiaire entre le corps du téléphone mobile et le boîtier d'alimentation. Cependant ce bloc interface intermédiaire n'est capable que de mesurer une consommation de courant puisque seuls des fils d'un bus d'alimentation électrique joignant le boîtier au corps sont prévus à cette interface. En conséquence, avec une telle solution il n'est pas envisageable d'ajouter des fonctions électroniques faisant intervenir des signaux échangés par ce téléphone mobile sur sa voie hertzienne. En outre, l'interface intermédiaire est mécaniquement peu épaisse, de sorte qu'elle ne propose pas de réelles possibilités à un utilisateur de disposer de commandes pour agir sur le fonctionnement du téléphone mobile et/ou du bloc.

On connaît par le document FR-A-2 748 173 un téléphone mobile muni d'une batterie formant annuaire. Cependant la solution décrite dans ce document nécessite l'emploi d'un connecteur externe au téléphone mobile, rendant ce connecteur externe inaccessible.

Dans l'invention on a voulu résoudre ce problème de fabrication marginale en évitant d'avoir à concevoir des corps de téléphone mobile différenciés pour chaque utilisation. Au contraire, dans l'invention on a retenu un corps de téléphone mobile identique, que l'utilisation soit une utilisation classique ou une utilisation avec un dispositif complémentaire tel qu'évoqué ci-dessus. Dans l'invention on remplace en fait le boîtier de batterie par un boîtier monobloc plus complexe, comportant la fonction électronique recherchée et bien entendu les batteries. Ce boîtier électronique monobloc plus complexe peut comporter alors selon l'application recherchée un écran, un clavier ou d'autres organes. Cet écran et ce clavier trouvent facilement leur place sur le dos du téléphone mobile alors qu'ils ne l'auraient pas trouvée sur la tranche du bloc interface selon l'enseignement du document cité ci-dessus.

Pour permettre ensuite une véritable communication entre ce boîtier monobloc et le téléphone mobile, on utilise dans l'invention un connecteur fonctionnel déjà existant du corps. Ce connecteur fonctionnel est soit le connecteur d'embase dont sont munis tous les téléphones mobiles actuels. Soit dans des applications de type GSM, ce connecteur fonctionnel est celui d'un circuit de contrôle, dit circuit SIM, qui est normalement en relation avec le téléphone mobile. Dans ce cas, dans l'invention, on dérive les contacts du corps du téléphone pour qu'ils aboutissent dans le boîtier monobloc mixte d'alimentation et effectuent la fonction complémentaire recherchée.

De cette façon il est plus facile de concevoir et de mettre au point des boîtiers d'alimentation munis de dispositifs complémentaires. En effet il n'existe plus pour ces boîtiers de contraintes d'occupation d'un emplacement réduit puisqu'il est possible de concevoir un nouveau volume monobloc. Par ailleurs, comme rien n'est changé à la constitution des corps de téléphones mobiles ceux-ci peuvent continuer à garder les mêmes solutions d'industrialisation. Tout au plus un programme général de fonctionnement du téléphone mobile peut être modifié. Mais ce programme est un programme enregistré en mémoire. Il suffit de charger à la fabrication, voire de télécharger pour les téléphones anciens, un nouveau programme dans ce corps de téléphone mobile pour qu'il puisse accepter une nouvelle fonction. Dans ces conditions on montrera qu'on aboutit au résultat recherché que les utilisations marginales deviennent accessibles à faible coût, et assez rapidement à partir du moment où elles sont commercialement demandées.

L'invention a donc pour objet un téléphone mobile comportant un corps muni de circuits électroniques pour faire fonctionner ce téléphone mobile, un boîtier monobloc et amovible de batterie pour alimenter les circuits électroniques de ce corps, et une liaison pour relier un connecteur d'alimentation du corps à un connecteur d'alimentation du boîtier, caractérisé en ce qu'il comporte des circuits électroniques fonctionnels dans le boîtier, un connecteur fonctionnel du boîtier, un connecteur fonctionnel du corps, et une liaison supplémentaire pour raccorder ce connecteur fonctionnel du boîtier à ce connecteur fonctionnel du corps.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'un téléphone mobile de l'état de la technique et des ajouts qui y sont prévus pour qu'il satisfasse aux modifications demandées ;
- Figure 2 : une variante de réalisation dans laquelle la liaison supplémentaire est une liaison par courant porteur, utilisant une liaison ancienne ou en constituant une nouvelle.

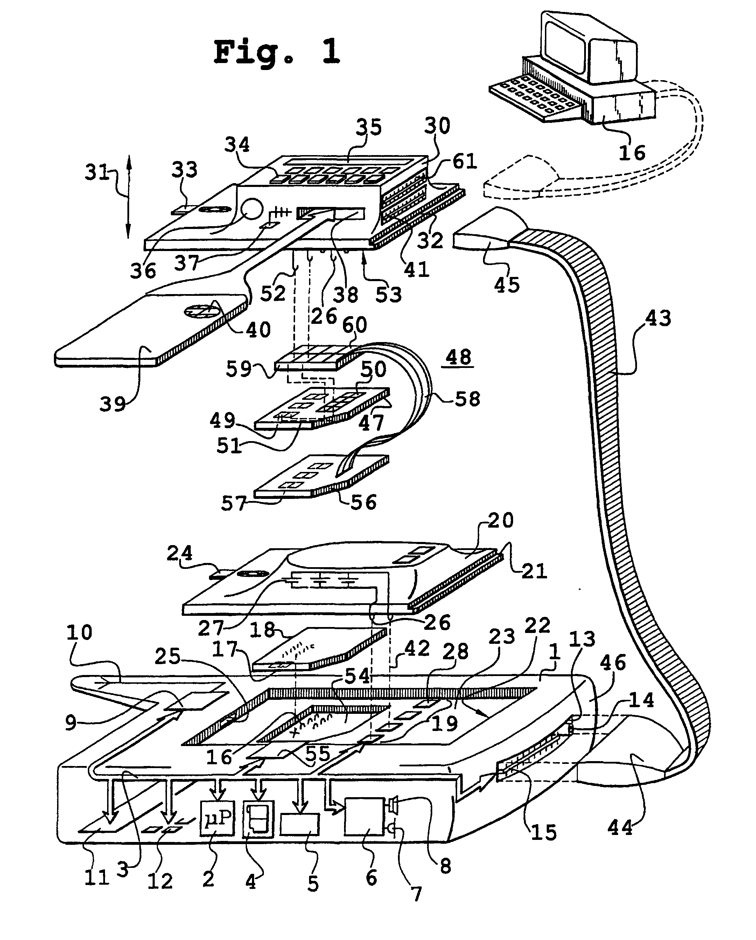

La figure 1 montre un téléphone mobile selon l'invention. Celui-ci comporte un corps 1 muni de circuits électroniques pour le faire fonctionner. Ces circuits électroniques comportent, schématiquement, un microprocesseur 2 relié par un bus 3 à une mémoire programme 4, une mémoire de données 5, et des circuits 6 de traitement des signaux de parole. Les circuits 6 sont reliés d'une manière symbolique à un microphone 7 et un haut-parleur 8 du téléphone mobile. Les circuits électroniques du bloc 1 sont reliés par ailleurs à des circuits d'émission 9 eux-mêmes reliés à une antenne 10. Ils sont encore reliés à un ensemble de périphériques. Parmi ces périphériques on distingue d'une manière connue un écran 11, des boutons de commande 12 et, dans les téléphones modernes, un connecteur d'embase 13. L'écran 11 et les boutons 12 servent à se servir du téléphone mobile d'une manière connue. Le connecteur d'embase 13 comporte un connecteur assez complet muni de connexions diverses permettant différents types d'utilisation. Par exemple un connecteur 14 de type coaxial peut permettre de relier le téléphone mobile à une antenne extérieure, une antenne de voiture par exemple. Un connecteur normalisé 15, à la norme HIROSE, permet de relier le téléphone mobile à différents organes, notamment à un micro-ordinateur 16.

Les téléphones de type GSM possèdent par ailleurs un connecteur 16 relié au bus 3, et qui est destiné à entrer en communication avec des métallisations 17 d'un circuit électronique amovible de contrôle 18. Ce circuit amovible de contrôle est un circuit dit micromodule SIM pour Secure Identification Module (module d'identification sécurisé). Le bus 3 est encore en relation avec un connecteur d'alimentation 19 destiné à recevoir une distribution électrique produite par un boîtier d'alimentation électrique 20. Le micromodule SIM 18 est placé dans un logement situé à la surface interne du corps 1, celle qui reçoit le boîtier 20.

Le boîtier 20 de batterie, est amovible. Dans ce but il peut comporter par exemple d'un côté une griffe 21 destinée à s'agripper dans une cavité 22 d'un réceptacle 23 ménagé dans le corps 1. A une autre extrémité, le boîtier 20 possède un loquet 24 destiné à s'engager dans un trou 25 réalisé sur un chant du réceptacle 23. Lorsque le boîtier amovible 20 est en place, des palpeurs électriques 26 reliés à des éléments 27 de batterie du boîtier 20 viennent au contact de métallisations 28 du connecteur 19. Les opérations d'entretien d'un tel téléphone mobile sont particulièrement simples. Il suffit d'ouvrir le loquet 24, et de basculer le boîtier 20 autour de la griffe 21 pour l'extraire du réceptacle 23. On a alors accès au micromodule SIM 18 pour le changer.

Dans l'invention, on a décidé de remplacer le boîtier d'alimentation 20 classique par un boîtier 30 d'un type particulier. Le boîtier 30 jouera comme le boîtier 20 une fonction d'alimentation. Notamment il continuera à comporter les palpeurs 26 destinés à entrer en relation avec les métallisations 28. Cependant, la conception du boîtier 30 de l'invention sera différente en ce sens que son épaisseur 31 notamment ne sera plus contrainte à ressembler à celle du boîtier 20. Le boîtier 30 possédera néanmoins une griffe 32 et un loquet 33 pour jouer le même rôle que la griffe 21 et le loquet 24. Le boîtier 30 possédera de préférence tous les agréments nécessaires pour la fonction envisagée.

On a montré ici d'une manière composite un ensemble de fonctions. Il n'est bien entendu pas nécessaire que toutes les fonctions soient réalisées sur un même boîtier 30. Il est en effet possible de prévoir des boîtiers 30 de types différents, chacun d'entre eux ne possédant qu'une des fonctions montrées sur celui de la figure 1. Le boîtier 30 possédera à l'intérieur un circuit électronique du même type que celui du corps 1. Il pourra posséder par ailleurs, reliés à ce circuit électronique, un jeu de boutons de commande 34 ainsi qu'un écran de visualisation 35. Cet écran 35 pourra être notablement plus grand que l'écran 11 du téléphone mobile qui est en général de taille relativement petite. Dans ce cas le boîtier 30 pourra exécuter les fonctions d'un organisateur de bureau : c'est-à-dire contenir une fonction agenda, une fonction calculette, une fonction de mémorisation d'annuaire, une fonction de notes ainsi que tous types d'utilisation envisageables. Tout simplement la mémoire programme du circuit électronique du boîtier 30 comportera des fonctions correspondant à ces utilisations.

En variante, ou en supplément, le boîtier 30 pourra comporter une diode à infrarouge 36, un circuit d'émission radioélectrique (de préférence sur une bande de fréquence différente de la bande de fréquence utilisée par l'aérien 10), ainsi qu'un lecteur 38 d'une carte 39 à puce 40. Le lecteur 38 comporte un connecteur du même type que le connecteur 16. Tous ces circuits sont reliés au bus de commande d'adresse et de données du circuit électronique du boîtier 30.

Dans l'invention le boîtier 30 n'est pas que plaqué sur l'arrière du corps 1 du téléphone mobile. Notamment le boîtier 30 ne fait pas que partager avec ce dernier les batteries qu'il contient. En effet dans l'invention, les informations traitées, et créées, dans le boîtier 1 sont destinées à être transmises au, ou reçues du circuit électronique 2-16 du corps 1. Dans ce but dans l'invention on raccorde en plus un connecteur fonctionnel 41 du boîtier 30 à un connecteur fonctionnel du corps 1. Dans un exemple ce connecteur fonctionnel est le connecteur 15. Ce faisant, en plus d'une liaison 42, classique, résultant de la mise en contact des palpeurs 26 avec les métallisations 28 d'alimentation, on réalise une liaison supplémentaire 43 fonctionnelle.

La liaison 43 comporte dans un exemple un câble muni de deux connecteurs de type complémentaire au type des connecteurs 15 et 41 respectivement. Si ces connecteurs 15 et 41 sont des connecteurs mâles, le câble 43 comportera deux prises femelles 44 et 45 respectivement. On constate qu'en agissant ainsi on n'a modifié en rien le corps 1 du téléphone mobile. Par contre, on obtient toute la puissance de l'interconnexion au moyen de la liaison 43. Dans ce cas, la liaison 43 est externe au corps 1 et au boîtier 30. Elle utilise notamment la prise d'embase 15. Il est possible par ailleurs de prévoir que la fiche 45 soit montée à demeure, sans possibilité d'extraction, dans le connecteur 41. Dans ce cas de préférence la longueur et la forme du câble 43 seront adaptées de telle façon qu'il ne soit pas flottant à l'endroit de la base 46 du téléphone mobile.

En variante, le boîtier 30 peut intégrer mécaniquement une connexion au connecteur 15 de façon à ne pas avoir de câble externe. Dans ce cas, le connecteur 15 laisse apparaître des broches accouplées à proximité de la cavité 22. Dans ce cas la griffe 32 peut être munie de moyens pour se connecter à ces broches accouplées. Tous les téléphones mobiles ne possèdent cependant pas une telle faculté.

Dans le cadre d'une utilisation en téléphonie de type GSM, lorsqu'un micromodule SIM 18 est utilisé, on peut procéder d'une autre façon. On remplace le micromodule 18 soit par un circuit de liaison 47 soit par un circuit flexible 48. Le circuit de liaison 47 a mécaniquement la même dimension que le micromodule 18. Il comporte par exemple une plaquette de circuit imprimé double face. Il possède sur une face, ici non visible, des métallisations 49 disposées conformément à la disposition des métallisations 17 du micromodule 18. Sur une autre face il comportera des métallisations 50. En interne, dans le corps de la plaquette 47 sont réalisées des connexions 51 pour relier les métallisations 50, individuellement à des métallisations 49. Les métallisations 50 de la plaquette 47 apparaissent en un endroit de cette dernière qui est visible et accessible dans le réceptacle 23. En effet, pour que le micromodule 18 puisse être enlevé, il faut bien pouvoir l'agripper. Les métallisations 50 sont situées à l'endroit de ces parties agrippables, là où elles sont apparentes à l'interface 23.

Dans ce cas, le boîtier 30 comportera d'autres palpeurs 52 pour venir se connecter sur les métallisations 50 lorsque le boîtier 30 est engagé dans le corps 1 au-dessus de la plaquette 47. Dans ce cas, le boîtier 30 comporte un logement pour y introduire le micromodule SIM 18. Au besoin le micromodule SIM 18 peut être introduit dans le lecteur 38 de carte 39 à puce 40. De préférence le boîtier 30 comportera à cet effet un logement ménagé sous la face inférieure 53 du boîtier 30. Ce logement aura la même forme et possédera également des palpeurs électriques comme le logement 54 situé au fond du réceptacle 23 et qui reçoit normalement le micromodule SIM 18. Dans ce cas, à l'intérieur du boîtier 30, des connexions électriques permettent de relier les palpeurs 52 aux palpeurs de ce logement. En agissant ainsi on dérive les connexions du bus 3 qui arrivaient sur les palpeurs 16.

Il est possible que, pour des raisons de sécurité, à l'endroit de la connexion des palpeurs 16 au bus 3, soit situé un circuit 55 de mutation de protocole. Il pourra être utile dans ce cas de modifier les paramètres de fonctionnement du circuit 55. C'est assez facile puisque ces paramètres sont des paramètres de type logiciel.

Dans un autre mode de réalisation, la plaquette de circuit imprimé double face 47 peut également contenir le microcircuit du micromodule SIM. Le micromodule SIM 18 est alors remplacé par un autre micromodule SIM, mécaniquement identique, mais comportant sur une face les métallisations 49 disposées conformément à la disposition des métallisations 17 et reliées au microcircuit SIM, et sur une autre face les métallisations 50 reliées aux métallisations 49. Ce mode de réalisation permet d'éviter de placer un connecteur micro SIM dans le boîtier 30 pour accueillir le micromodule SIM 18. Avec une telle solution, les métallisations 49 servent alternativement pour faire fonctionner le micromodule SIM et le boîtier 30. En variante, une transmission par courant porteurs peut être assurée sur les métallisations 49, au moins sur celles qui servent pour l'alimentation électrique du micromodule SIM.

Dans le cas où le circuit de liaison est un circuit flexible 48, il comportera une plaquette 56 du même type que la plaquette 47. Des métallisations 57, occupant, elles aussi, des positions comparables aux métallisations 17 du circuit 18, sont reliées à une nappe 58 de connexions flexibles. Les connexions de la nappe 58 sont reliées à une autre extrémité à une autre plaquette 59 possédant des métallisations 60. Dans ce cas, le boîtier 30 comportera une cavité supplémentaire, par exemple du même type que la cavité 54, pour recevoir la plaquette 58 au lieu des palpeurs 52.

Comme autre fonction supplémentaire, le connecteur 41 peut être dédoublé en un connecteur 61 de façon à permettre la liaison du boîtier 30 à un micro-ordinateur 16, simultanément à la connexion au connecteur 15. Les plots des connecteurs 41 et 61 sont appariés.

L'avantage des solutions des microplaquettes 47 et 56 est que la présence de la liaison fonctionnelle est interne à l'interface entre le corps 1 et le boîtier 30 : elle ne dépasse pas l'extérieur comme la liaison 43.

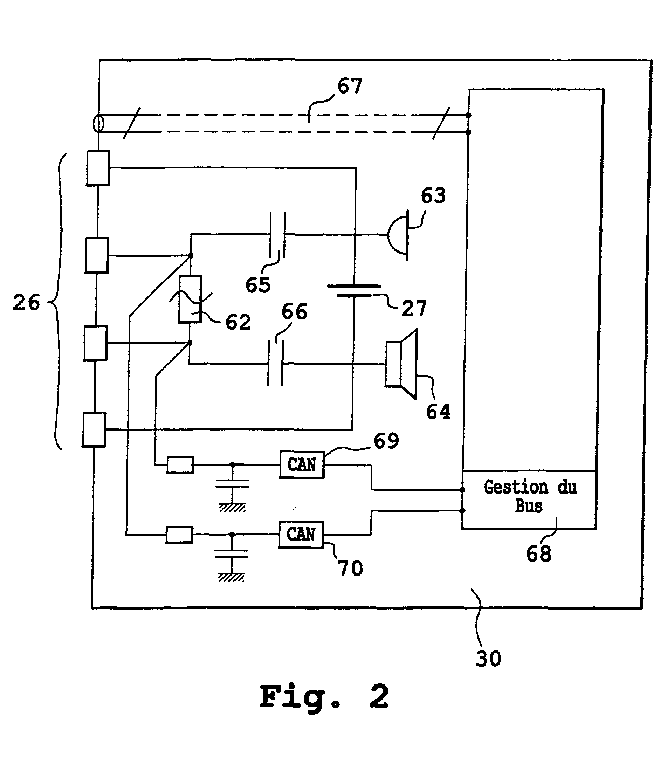

En variante, la liaison fonctionnelle 43 comporte, en tout ou partie, une liaison par courants porteurs telle que montrée sur la figure 2. Dans celle-ci, une batterie 27 est reliée au corps 1 par deux palpeurs de l'ensemble 26 de palpeurs du boîtier 30. Deux autres palpeurs sont reliés d'une manière classique à une résistance 62 de type CTN. La résistance 62 sert à mesurer la température de la batterie 27 contre laquelle elle est plaquée. Une telle résistance 62 sert alors notamment à contrôler des charges rapides de la batterie 27.

Dans l'invention ces deux palpeurs de la résistance 62, et les plots correspondant dans le corps 1, sont utilisés pour transmettre des signaux par courants porteurs. La transmission peut être à modulation de fréquence. Dans ce cas, un signal à une fréquence donnée a une signification différente de celle d'un autre signal à une autre fréquence donnée. Les signaux superposés peuvent être également impulsionnels. La présence et l'absence d'une impulsion renseignent sur des états binaires. Dans les deux cas, le rapport du courant passant dans un palpeur à la tension disponible entre les deux palpeurs continue de renseigner sur la valeur de la résistance 62. Par rapport à la masse du corps et du boîtier, représentée par exemple par le pôle négatif de la batterie 27, chacun de ces deux palpeurs permet d'acheminer un signal.

Dans un exemple, un premier signal est un signal issu d'un microphone 63 déporté, alors qu'un autre signal est destiné à un haut-parleur 64 annexe. Dans ce cas, les deux liaisons comportent un condensateur 65 ou 66 en série. Au besoin, ces deux signaux peuvent être des signaux très basse fréquence, et être des signaux de commande d'un bus 67 constitué dans la liaison supplémentaire 43. Les signaux transmis par les palpeurs de l'ensemble 26 servent alors à gérer le bus 67 par l'intermédiaire d'un circuit 68 de gestion auquel ils sont appliqués. Dans ce cas, ces signaux peuvent subir dans le boîtier 30 un filtrage et ou une quantification par des convertisseurs analogiques numériques 69 et 70.

## Revendications

1. Téléphone mobile comportant un corps (1) muni de circuits (2-15) électroniques pour faire fonctionner ce téléphone mobile, un boîtier (20, 30) monobloc et amovible de batterie pour alimenter les circuits électroniques de ce corps, et une liaison (42) pour relier un connecteur (19) d'alimentation du corps à un connecteur (26) d'alimentation du boîtier, **caractérisé en ce qu'**il comporte des circuits électroniques (34-38) fonctionnels dans le boîtier (30), un connecteur fonctionnel (41) du boîtier et un connecteur fonctionnel du corps tous deux étant relatifs aux transmissions des informations traitées du boîtier, et une liaison (51, 58) supplémentaire pour raccorder ce connecteur fonctionnel du boîtier à ce connecteur fonctionnel du corps, les contacts dudit connecteur fonctionnel du corps apparaissant dans une cavité interne (23) entre le corps et le boîtier, où se trouve un logement (54) d'un microcircuit (18) SIM, on incorpore dans le logement, en lieu et place de ce microcircuit SIM, un circuit (47) double face jouant le rôle de la liaison supplémentaire et présentant sur une face, vers le corps, des premières métallisations (49) de contact reliées, sur l'autre face, à des deuxièmes métallisations (50) de contact.

2. Téléphone selon la revendication 1 **caractérisé en ce que** le circuit double face comporte un microcircuit de contrôle de sécurité relié aux premières métallisations.

3. Téléphone mobile comportant un corps (1) muni de circuits (2-15) électroniques pour faire fonctionner ce téléphone mobile, un boîtier (20, 30) monobloc et amovible de batterie pour alimenter les circuits électroniques de ce corps, et une liaison (42) pour relier un connecteur (19) d'alimentation du corps à un connecteur (26) d'alimentation du boîtier, **caractérisé en ce qu'**il comporte des circuits électroniques (34-38) fonctionnels dans le boîtier (30), un connecteur fonctionnel (41) du boîtier et un connecteur fonctionnel du corps tous deux étant relatifs aux transmissions des informations traitées du boîtier, et une liaison (51, 58) supplémentaire pour raccorder ce connecteur fonctionnel du boîtier à ce connecteur fonctionnel du corps, les contacts dudit connecteur fonctionnel du corps apparaissant dans une cavité interne (23) entre le corps et le boîtier, où se trouve un logement (54) d'un microcircuit (18) SIM, on incorpore dans le logement en lieu et place de ce microcircuit circuit amovible un circuit flexible (48) jouant le rôle de la liaison supplémentaire et présentant à une extrémité vers le corps, des premières métallisations (57) de contact reliées, à l'autre extrémité vers le boîtier, à des deuxièmes métallisations (60) de contact.

4. Téléphone selon l'une des revendications 1 à 3, **caractérisé en ce que** la liaison supplémentaire comporte une liaison fonctionnelle relative aux transferts de données par courants porteurs.

5. Téléphone selon la revendication 4, **caractérisé en ce que** la liaison fonctionnelle par courants porteurs passe par la liaison entre le connecteur d'alimentation du corps et le connecteur d'alimentation du boîtier.

6. Téléphone selon l'une des revendications 1 à 5, **caractérisé en ce que** le boîtier comporte un lecteur (38) de carte (39) à puce (40).

7. Téléphone selon l'une des revendications 1 à 6 **caractérisé en ce que** le boîtier comporte un circuit (36) de communication par infrarouge ou par radio.

8. Téléphone selon l'une des revendications 1 à 7, **caractérisé en ce que** le boîtier comporte un circuit (37) de télécommande.

9. Téléphone selon l'une des revendications 1 à 8, **caractérisé en ce que** le boîtier comporte un circuit (61) de connexion à un ensemble informatique dédoublé du connecteur fonctionnel du boîtier.

## Patentansprüche

1. Mobiltelefon mit einem ein Hauptteil (1) mit elektronischen Schaltkreisen (2-15) zur Funktion des Telefons, mit einem einstückigen abnehmbaren Batteriegehäuse (20, 30) um die elektronischen Schaltkreise des Hauptteils zu versorgen, und mit einem Verbinder (42) zur Verbindung eines Versorgungssteckers (19) des Hauptteils mit einem Versorgungsstecker (26) des Gehäuses, **dadurch gekennzeichnet, dass** das Mobiltelefon elektronische Schaltkreise (34-38) im Gehäuse (30), einen Verbindungssteckplatz (41) des Gehäuses und einen Verbindungssteckplatz des Hauptteils umfasst, die beide der Übermittlung von Daten dienen, die im Gehäuse verarbeitet werden, und einer zusätzlichen Verbindung (51, 58), um den Steckplatz des Gehäuses mit dem Steckplatz des Hauptteils zu verbinden, wobei die Kontakte des Steckplatzes des Hauptteils in einer inneren Ausnehmung (23) zwischen dem Hauptteil und dem Gehäuse angeordnet sind, wo ein Platz (54) für einen SIM-Mikroschaltkreis (18) vorgesehen ist, an dem anstelle eines SIM-Mikroschaltkreises ein doppelseitiger Schaltkreis (47) angeordnet ist, der die zusätzliche Verbindung herstellt und auf seiner dem Hauptteil zugewandten Seite erste Metallkontakte (49) aufweist, die verbunden sind mit zweiten Metallkontakten (50) auf der anderen Seite.

2. Mobiltelefon nach Anspruch 1, **dadurch gekennzeichnet, dass** der doppelseitige Schaltkreis einen Mikroschaltkreis zur Sicherheitskontrolle umfasst, der mit den ersten Metallkontakten verbunden ist.

3. Mobiltelefon mit einem ein Hauptteil (1) mit elektronischen Schaltkreisen (2-15) zur Funktion des Telefons, mit einem einstückigen abnehmbaren Batteriegehäuse (20, 30) um die elektronischen Schaltkreise des Hauptteils zu versorgen, und mit einem Verbinder (42) zur Verbindung eines Versorgungssteckers (19) des Hauptteils mit einem Versorgungsstecker (26) des Gehäuses, **dadurch gekennzeichnet, dass** das Mobiltelefon elektronische Schaltkreise (34-38) im Gehäuse (30), einen Verbindungssteckplatz (41) des Gehäuses und einen Verbindungssteckplatz des Hauptteils umfasst, die beide der Übermittlung von Daten dienen, die im Gehäuse verarbeitet werden, und einer zusätzlichen Verbindung (51, 58), um den Steckplatz des Gehäuses mit dem Steckplatz des Hauptteils zu verbinden, wobei die Kontakte des Steckplatzes des Hauptteils in einer inneren Ausnehmung (23) zwischen dem Hauptteil und dem Gehäuse angeordnet sind, wo ein Platz (54) für einen SIM-Mikroschaltkreis (18) vorgesehen ist, an dem anstelle eines herausnehmbaren Mikroschaltkreises ein flexibler Schaltkreis (48) angeordnet ist, der die zusätzliche Verbindung herstellt und an seinem einen, dem Hauptteil zugewandten Ende erste Metallkontakte (57) aufweist, die verbunden sind mit zweiten, dem Gehäuse zugewandten Metallkontakten (60) an seinem anderen Ende.

4. Mobiltelefon nach einem der Ansprüche 1 bis 3, **dadurch gekennzeichnet, dass** die zusätzliche Verbindung eine Funktionsverbindung zur Übertragung von Daten durch Trägerströme umfasst.

5. Mobiltelefon nach Anspruch 4, **dadurch gekennzeichnet, dass** die Funktionsverbindung durch Trägerströme durch die Verbindung zwischen dem Versorgungsstecker des Hauptteils und dem Versorgungsstecker des Gehäuses führt.

6. Mobiltelefon nach einem der Ansprüche 1 bis 5, **dadurch gekennzeichnet, dass** das Gehäuse einen Kartenleser (38) für Chipkarten (39, 40) umfasst.

7. Mobiltelefon nach einem der Ansprüche 1 bis 6, **dadurch gekennzeichnet, dass** das Gehäuse einen Schaltkreis (36) zur Kommunikation per Infrarot oder Radiowellen umfasst.

8. Mobiltelefon nach einem der Ansprüche 1 bis 7, **dadurch gekennzeichnet, dass** das Gehäuse einen Fernbedienungsschaltkreis (37) umfasst.

9. Mobiltelefon nach einem der Ansprüche 1 bis 8, **dadurch gekennzeichnet, dass** das Gehäuse einen Schaltkreis (61) zur Verbindung mit einem Rechnersystem enthält, der vom Verbindungssteckplatz abgeteilt ist.

## Claims

1. Mobile telephone including a body (1) provided with electronic circuits (2 - 15) to cause this mobile telephone to operate, a one-piece and detachable battery unit (20, 30) for powering the electronic circuits of this body, and a connection (42) to connect a power supply connector (19) of the body to a power supply connector (26) of the unit, ***characterised by** the fact that it* includes operational electronic circuits (34 - 38) in the unit (30), an operational connector (41) of the unit and an operational connector of the body both relating to transmissions of processed data of the unit and an additional connection (51, 58) to connect this operational connector of the unit to this operational connector of the body, the contacts of the said operational connector of the body appearing in an internal cavity (23) between the body and the unit, in which is a housing (54) for a SIM microcircuit (18), in this housing is incorporated, in place and instead of this SIM microcircuit, a double-faced circuit (47) acting as an additional connection and presenting on one face, towards the body, first contact metallisations (49) connected, on the other face, to second contact metallisations (50).

2. Telephone as described in claim 1, ***characterised by** the fact that* the double-faced circuit includes a security monitoring microcircuit connected to the first metallisations.

3. Mobile telephone including a body (1) provided with electronic circuits (2 - 15) to cause this mobile telephone to function, a one-piece and detachable battery unit (20, 30) to supply the electronic circuits of this body, and a connection (42) to connect a power supply connector (19) of the body to a power supply connector (26) of the unit, ***characterised by** the fact that* it includes operational electronic circuits (34 - 38) in the unit (30), an operational connector (41) of the unit and an operational connector of the body both relating to transmissions of processed data of the unit, and an additional connection (51, 58) to connect this operational connector of the unit to this operational connector of the body, the contacts of the said operational connector of the body appearing in an internal cavity (23) between the body and the unit, in which is a housing (54) for a SIM (18) microcircuit, in this housing is incorporated in place and instead of this removable microcircuit a flexible circuit (48) acting as the additional circuit and presenting at one end towards the body first contact metallisations (57) connected, at the other end towards the unit, to second contact metallisations (60).

4. Telephone as described in one of claims 1 to 3, ***characterised by*** the fact that the additional connection includes an operational connection relating to transfers of data by carrier currents.

5. Telephone as described in claim 4, ***characterised by** the fact that* the operational connection by carrier currents passes through the connection between the power supply connector of the body and the power supply connector of the unit.

6. Telephone as described in one of claims 1 to 5, ***characterised by** the fact that* the unit includes a reader (38) for a card (39) with a chip (40).

7. Telephone as described in one of claims 1 to 6, ***characterised by** the fact that* the unit includes a circuit (36) for infra-red or radio communication.

8. Telephone as described in one of claims 1 to 7, ***characterised by** the fact that* the unit includes a remote control circuit (37).

9. Telephone as described in one of claims 1 to 8, ***characterised by*** the *fact that* the unit includes a circuit (61) for connection to a computer system split with the operational connector of the unit.
